(19)

Europäisches
Patentamt
European
Patent Office
Office européen
des brevets

(11) **EP 4 722 821 A1**

(12) **EUROPEAN PATENT APPLICATION**
published in accordance with Art. 153(4) EPC

(43) Date of publication:
**08.04.2026 Bulletin 2026/15**

(21) Application number: **23939872.0**

(22) Date of filing: **04.09.2023**

(51) International Patent Classification (IPC):
*G03H 1/04* (2006.01)        *G02B 3/00* (2006.01)
*G03H 1/22* (2006.01)

(52) Cooperative Patent Classification (CPC):
**G02B 3/00; G03H 1/04; G03H 1/22**

(86) International application number:
**PCT/KR2023/013145**

(87) International publication number:
**WO 2024/248233 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.06.2023 KR 20230071524**

(71) Applicant: **Cubixel Co., Ltd.
Seoul 05006 (KR)**

(72) Inventors:
• **KIM, Tae Geun**
**Seoul 08090 (KR)**
• **KIM, Bong Yon**
**Seoul 05008 (KR)**
• **LEE, Eung Joon**
**Seoul 04933 (KR)**

(74) Representative: **Mewburn Ellis LLP
Aurora Building
Counterslip
Bristol BS1 6BX (GB)**

(54) **LARGE AREA SCANNING HOLOGRAM CAMERA SYSTEM USING SEPARABLE LIGHT COLLECTING UNIT**

(57)    According to the present invention, the large-area scanning hologram camera system is provided which includes a scan beam generation unit configured to modulate a phase of a first beam split from a light source, convert the first beam into a first curvature beam, convert a second beam into a second curvature beam, and then interfere the first and second curvature beams to form a scan beam; a scan unit configured to receive the scan beam, project the scan beam onto an object; a projection unit including a scan lens and an imaging lens system and configured to project the scan beam onto an object plane where the object is located; and at least one light collecting unit installed on an outside of the projection unit with an optical axis different from an optical axis of the projection unit and configured to detect a beam reflected from the object.

FIG. 1

## Description

### Technical Field

The present invention relates to a large-area scanning hologram camera system using a separable light collecting unit, and more particularly, to a large-area scanning hologram camera system which uses a separable light collecting unit and may capture a scanning hologram of a large area with high resolution.

### Background Art

Conventional optical scanning hologram cameras use an interferometer to acquire a hologram of an object by forming a beam pattern with the spatial distribution of a Fresnel zone plate, projecting the beam pattern onto an object through a scan mirror, and collecting beams reflected from the object.

However, in such a conventional method, a size of the Fresnel zone plate has to be less than a size of a reflective surface of the scan mirror, a target area to be captured is determined by a scan angle range of the scan mirror and a distance from the object, and accordingly, it is difficult to capture high-resolution holograms of large areas.

The technology underlying the present invention is disclosed in Korea Patent No. 1304695 (announced on September 6, 2013).

### Disclosure of Invention

### Technical Problem

An object of the present invention is to provide a large-area scanning hologram camera system using a separable light collecting unit which may implement a high-resolution scanning hologram camera for a large area.

### Solution to Problem

The present invention provides a large-area scanning hologram camera system including a scan beam generation unit configured to modulate a phase of a first beam split from a light source, convert the first beam into a first curvature beam through a first beam curvature generation unit, convert a second beam into a second curvature beam through a second beam curvature generation unit, and then interfere the first and second curvature beams to form a scan beam; a scan unit configured to receive the scan beam, project the scan beam onto an object, and transfer the scan beam to the object by controlling a scanning position of the scan beam relative to the object in a horizontal direction and a vertical direction; a projection unit including a scan lens and an imaging lens system and configured to project the scan beam received from the scan unit onto an object plane where the object is located; and at least one light collecting unit installed on an outside of the projection unit with an optical axis different from an optical axis of the projection unit and configured to detect a beam reflected from the object.

Also, the light collecting unit may include a condensing lens system installed with an optical axis different from the optical axis of the projection unit and receiving the beam reflected from the object; and a light detector configured to detect a beam passing through the condensing lens system.

Also, the light collecting unit may be rotated by an angle $\theta_{OP-AXIS}^{CL}$ of an equation below with respect to the optical axis of the projection unit based on an intersection point where the optical axis of the projection unit meets the object plane.

$$\theta_{OP-AXIS}^{CL} = \tan^{-1}\frac{h}{\ell}$$

Here, $h$ represents a distance between an optical axis of the imaging lens system in the projection unit and a condensing lens system into which a beam is incident in the light collecting unit, and $\ell$ represents a distance between the imaging lens system and the object.

a plurality of light collecting units may be installed around the projection unit with different optical axes, and electric signals for the plurality of beams detected by the plurality of light collecting units may be combined by a signal merging processor and then transmitted to a PC for holographic image processing, or the electric signals for the plurality of beams detected by the plurality of light collecting units are transmitted to a PC for signal merging and holographic image processing.

Also, the imaging lens system may image a scan beam pattern arriving on an imaging plane of the imaging lens system onto the object plane where the object is located.

Also, the scan unit may transfer the scan beam, which has an optical axis that is inclined with respect to an optical axis of the scan lens according to scan angles of an x-scan unit and a y-scan unit for controlling the scanning position in the horizontal direction and the vertical direction, to a field plane of the scan lens.

Also, in a case where a field plane of the scan lens is located at the same position as an imaging plane of the imaging lens system, an equation below may be satisfied.

$$\theta^{IL}_{input}(x, y) = \theta^{SL}_{output}(x, y)$$

Here, $\theta^{IL}_{input}(x, y)$ represents a ray angle of a chief ray on the imaging plane of the imaging lens system when a plane coordinate system on the imaging plane of the imaging lens system is referred to as x-y, and $\theta^{SL}_{output}(x, y)$ represents a ray angle of a scan beam on the field plane of the scan lens when a plane coordinate system on the field plane of the scan lens is referred to as x-y.

Also, in a case where a position of a field plane of the scan lens is different from a position of an imaging plane of the imaging lens system and the field plane and the imaging plane are separated by a set distance, an equation below may be satisfied.

$$\theta^{IL}_{input}\left(x + \tan\left(\theta^{SL}_{output}(x, y)\Delta z\right), y + \tan\left(\theta^{SL}_{output}(x, y)\Delta z\right)\right) = \theta^{SL}_{output}(x, y)$$

Here, $\Delta z$ represents a distance between the field plane of the scan lens and the imaging plane of the imaging lens system, $\theta^{IL}_{input}(x, y)$ represents a ray angle of a chief ray on the imaging plane of the imaging lens system when a plane coordinate system on the imaging plane of the imaging lens system is referred to as x-y, and $\theta^{SL}_{output}(x, y)$ represents a ray angle of a scan beam on the field plane of the scan lens when a plane coordinate system on the field plane of the scan lens is referred to as x-y.

Also, a field size on a field plane of the scan lens may be determined by a front focal length and a scan angle of the scan lens through an equation below.

$$\text{Field Size}\left(D_{field}\right) = f_{\text{FFL}} \times \tan(\theta_S)$$

Here, $D_{field}$ is a field size on a field plane of the scan lens and is equal to or less than a field size on an imaging plane of the imaging lens system, $f_{\text{FFL}}$ represents a front focal length of the scan lens, and $\theta_S$ represents a maximum scan half-angle as a scan angle of the scan lens.

Also, the projection unit may further include an optical axis conversion lens disposed between the scan lens and the imaging lens system and configured to align a center of an optical axis of the scan lens with a center of an optical axis of the imaging lens system.

Also, the projection unit may be implemented as a structure selected from among a first structure including a telecentric-type scan lens having a ray angle of 0 degrees on a field plane, the optical axis conversion lens, and an imaging lens system having a ray angle of 0 degrees or more of a chief ray on an imaging plane, a second structure including a telecentric-type scan lens, the optical axis conversion lens, and an imaging lens system having a ray angle of 0 degrees or less of the chief ray on the imaging plane, a third structure including a scan lens having a ray angle of 0 degrees or more on the field plane, the optical axis conversion lens, and an imaging lens system having a ray angle of 0 degrees or more of the chief ray on the imaging plane, a fourth structure including a scan lens having a ray angle of 0 degrees or more on the field plane, the optical axis conversion lens, and an imaging lens system having a ray angle of 0 degrees or less of the chief ray on the imaging plane, a fifth structure including a scan lens having a ray angle of 0 degrees or less on the field plane, the optical axis conversion lens, and an imaging lens system having a ray angle of 0 degrees or more of the chief ray on the imaging plane, and a sixth structure including a scan lens having a ray angle of 0 degrees or less on the field plane, the optical axis conversion lens, an imaging lens system having a ray angle of 0 degrees or less of the chief ray on the imaging plane.

Also, in a case where a field plane of the scan lens is at the same position as an object plane of the optical axis conversion lens, an equation below may be satisfied.

$$\theta^{OCL}_{input}(x,y) = \theta^{SL}_{output}(x,y)$$

Here, $\theta^{OCL}_{input}(x,y)$ represents a ray angle of a chief ray on the object plane of the optical axis conversion lens when a plane coordinate system on the object plane of the optical axis conversion lens is referred to as x-y, and $\theta^{SL}_{output}(x,y)$ represents a ray angle of a scan beam on the field plane of the scan lens when a plane coordinate system on the field plane of the scan lens is referred to as x-y.

Also, in a case where a position of a field plane of the scan lens is different from a position of an object plane of the optical axis conversion lens and the field plane and the object plane are separated by a set distance, an equation below may be satisfied.

$$\theta^{OCL}_{input}(x + \tan(\theta^{SL}_{output}(x,y)\Delta z), y + \tan(\theta^{SL}_{output}(x,y)\Delta z)) = \theta^{SL}_{output}(x,y)$$

Here, $\Delta z$ represents a distance between the field plane of the scan lens and the object plane of the optical axis conversion lens, $\theta^{OCL}_{input}(x,y)$ represents a ray angle of a chief ray on the object plane of the optical axis conversion lens when a plane coordinate system on the object plane of the optical axis conversion lens is referred to as x-y, and $\theta^{SL}_{output}(x,y)$ represents a ray angle of a scan beam on the field plane of the scan lens when a plane coordinate system on the field plane of the scan lens is referred to as x-y.

Also, in a case where an imaging plane of the optical axis conversion lens is at the same position as an imaging plane of the imaging lens system, an equation below may be satisfied.

$$\theta^{IL}_{input}(x,y) = \theta^{OCL}_{output}(x,y)$$

Here, $\theta^{IL}_{input}(x,y)$ represents a ray angle of a chief ray on the imaging plane of the imaging lens system when a plane coordinate system on an image plane of the imaging lens system is referred to as x-y, and $\theta^{OCL}_{output}(x,y)$ represents a ray angle of a scan beam on the imaging plane of the optical axis conversion lens when a plane coordinate system on the imaging plane of the optical axis conversion lens is referred to as x-y.

Also, in a case where a position of an imaging plane of the optical axis conversion lens is different from a position of an imaging plane of the imaging lens system and the imaging planes are separated by a set distance, an equation below may be satisfied.

$$\theta^{IL}_{input}(x + \tan(\theta^{OCL}_{output}(x,y)\Delta z), y + \tan(\theta^{OCL}_{output}(x,y)\Delta z)) = \theta^{OCL}_{output}(x,y)$$

Here, $\Delta z$ represents a distance between the imaging plane of the optical axis conversion lens and the imaging plane of the imaging lens system, $\theta^{IL}_{input}(x,y)$ represents a ray angle of a chief ray on the imaging plane of the imaging lens system when a plane coordinate system on an image plane of the imaging lens system is referred to as x-y, and $\theta^{OCL}_{output}(x,y)$ represents a ray angle of a scan beam on the imaging plane of the optical axis conversion lens when a plane coordinate system on the imaging plane of the optical axis conversion lens is referred to as x-y.

**Advantageous Effects of Invention**

According to the present invention, a high-resolution scanning hologram camera may be implemented for a large area.

**Brief Description of Drawings**

FIG. 1 is a diagram illustrating a configuration of a large-area scanning hologram camera system according to a first embodiment of the present invention.

FIG. 2 is a diagram specifically illustrating a configuration of a projection unit illustrated in FIG. 1.

FIG. 3 is a diagram illustrating a configuration of a large-area scanning hologram camera system according to a second embodiment of the present invention.

FIG. 4 is a diagram specifically illustrating a configuration of a projection unit illustrated in FIG. 3.

FIG. 5 is a diagram illustrating a ray angle of light in an optical system.

FIG. 6 is a diagram illustrating a position of a condensing lens system installed axially with respect to an optical axis of an imaging lens system in an embodiment of the present invention.

FIG. 7 is a diagram illustrating a modification example of a light collecting unit according to an embodiment of the present invention.

FIGS. 8 and 9 are diagrams illustrating examples of a process of generating a holographic image by combining signals collected by multiple light colleting units in embodiments of the present invention.

**Best Mode for Carrying out the Invention**

Hereinafter, embodiments of the present invention will be described in detail with reference to the attached drawings such that those skilled in the art to which the present invention belongs may easily implement the present invention. However, the present invention may be implemented in various different forms and is not limited to the embodiments described herein. In addition, in order to clearly describe the present invention in the drawings, portions irrelevant to the description are omitted, and similar reference numerals are used throughout the specification to refer to similar elements.

Throughout the specification, when a part is referred to as being "connected" to another part, this includes not only "directly connected" but also "electrically connected" with another element therebetween. Also, when a part is referred to as "including or comprising" a component, unless otherwise specified, this does not exclude other components but rather includes the possibility of additional components.

The present invention relates to a large-area scanning hologram camera system using a separable light collecting unit, and proposes a scanning hologram camera system that has a structure in which a projection unit is separated from a light collecting unit and may implement a high-resolution scanning hologram camera for a large area.

Hereinafter, a large-area scanning hologram camera system using a separable light collecting unit according to an embodiment of the present invention will be described in more detail with reference to the drawings.

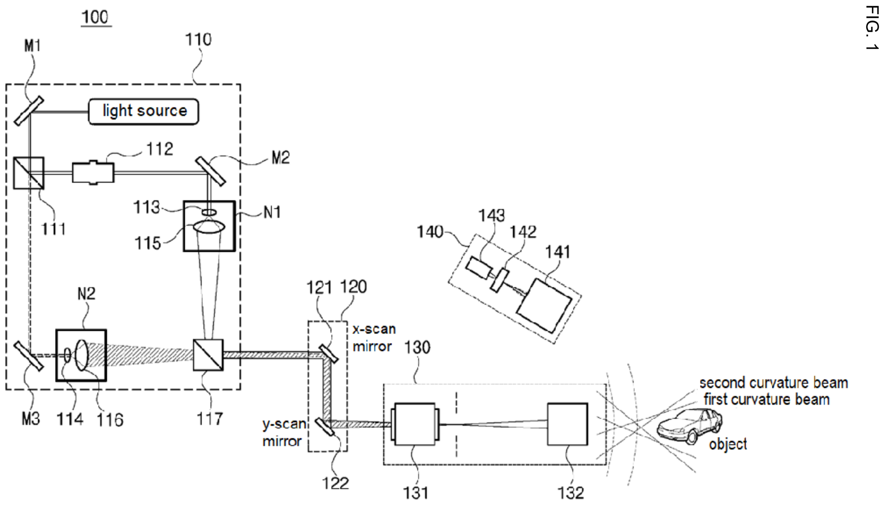

As illustrated in FIG. 1, a large-area scanning hologram camera system 100 according to the first embodiment of the present invention includes a scan beam generation unit 110, a scan unit 120, a projection unit 130, and a light collecting unit 140. This basic structure also applies to a second embodiment.

First, the scan beam generation unit 110 frequency-shifts a first beam among first and second beams split from a light source and converts the first beam into a first curvature beam through a first lens 115, and converts the second beam into a second curvature beam through a second lens 116, and then causes the first and second curvature beams to interfere with each other to form a scan beam.

The scan beam generation unit 110 uses a Mark-Zehnder interferometer structure that splits a light source into first and second beams, generates first and second curvature beams, and then recouples the two generated beams.

The scan beam generation unit 110 includes a first mirror M1, a beam splitter 111, a frequency shift means 112, second and third mirrors M2 and M3, first and second beam curvature generation units N1 and N2, and an interference means 117, and may further include a light source.

The light source is a component that generates electromagnetic waves. The light source may include various means, such as a laser generator capable of generating electromagnetic waves, a light emitting diode (LED), a unit that generates a beam with low coherence, such as halogen light having a short coherence length, and so on. Hereinafter, a representative example is provided where the light source is implemented as a laser generator.

A beam output from a light source is transferred to the first mirror M1, reflected, and input to the beam splitter 111.

The beam splitter 111 separates the incident beam into a first beam and a second beam, transfers the first beam to a phase modulation means 112 (acousto-optic modulator), and transfers the second beam to the third mirror M3. That is, in the beam splitter 111, a beam following a path of the first beam is transferred to the phase modulation means 112, and a beam following a path of the second beam is transferred to the third mirror M3.

Here, the beam splitter 111 may be composed of an optical fiber coupler, a beam splitter, a geometric phase lens, a diffraction optic element, and so on, and may be implemented as transferring a beam to the outside through a free space.

Here, in a case where using a means capable of splitting a beam in-line, such as a geometric phase lens, the beam may be split into a first beam and a second beam in-line. Hereinafter, it is assumed that each optical splitter is implemented as a beam splitter.

The phase modulation means 112 frequency-shifts the first beam and transfers the first beam to the second mirror M2. A frequency shifting means, that is, the phase modulation means, may use the frequency generated by a function generator (not illustrated) to shift a frequency of the first beam by $\Omega$ and transfer the first beam to the second mirror M2. Here, the phase modulation means may be implemented as various types of modulators that include an acousto-optic modulator and an electro-optic modulator and modulate a phase of light according to an electrical signal.

The first beam reflected from the second mirror M2 is transferred to the first beam curvature generation unit N1. The second beam reflected from the third mirror M3 is transferred to the second beam curvature generation unit N2. A beam expander may be implemented as a collimator.

The first and second beam curvature generation units N1 and N2 receive respective beams, collimate the beams, and generate expanded beams, each having a curvature ranging from a negative curvature to a positive curvature.

A specific implementation example of the first beam curvature generation unit N1 is a beam expander including a first lens 113 that converts the first beam reflected from the second mirror M2 into a spherical wave and a second lens 115 that receives the spherical wave and generates a beam (first curvature beam) with a curvature, and adjusts a curvature of the beam by adjusting a distance between the first lens 113 and the second lens 115. A specific implementation example of the second beam curvature generation unit N2 is a beam expander including a third lens 114 that converts the second beam reflected from the third mirror M3 into a spherical wave and a fourth lens 116 that receives the spherical wave and generates a beam with a curve (second curvature beam), and adjusts a curvature of the beam by adjusting a distance between the third lens 114 and the fourth lens 116.

The first beam curvature generation unit N1 converts the first beam into a first curvature beam and transfers the first curvature beam to the interference means 117. That is, the first beam curvature generation unit N1 modulates a spatial distribution of the first beam to generate a second curvature beam.

The second beam curvature generation unit N2 converts the second beam into a first curvature beam and transfers the first curvature beam to the interference means 117. That is, the second beam curvature generation unit N2 modulates a spatial distribution of the second beam to generate a second curvature beam.

The generated first and second curvature beams interfere with each other while passing through the interference means 117, and are transferred to the scan unit 130. The interference means 117 may be implemented as a beam splitter.

The interference means 117 overlaps and interferes the first beam (first curvature beam) passing through the first beam curvature generation unit N1 and the second beam (second curvature beam) passing through the second beam curvature generation unit N2 to form a scan beam having an interference pattern of a Fresnel zone pattern. Here, it is preferable to align an optical axis of the first curvature beam with an optical axis of the second curvature beam.

In this way, the scan beam generation unit 110 converts the first and second beams separated from a light source into first and second curvature beams, overlaps the first and second curvature beams with each other through the interference means 117, forms a scan beam, and transfers the formed scan beam to the scan unit 120.

A beam incident on the scan unit 120 may be transferred to the projection unit 130 through an x-scan unit (for example, a horizontal scan mirror) and a y-scan unit (for example, a vertical scan mirror).

The scan unit 120 may include a horizontal scan mirror 121 (hereinafter, an "x-scan mirror") and a vertical scan mirror 122 (hereinafter, a "y-scan mirror") to control a scanning position of the scan beam with respect to an object in the horizontal and vertical directions. The scan unit 120 controls an incident scan beam in the horizontal direction (x direction) and vertical direction (y direction) by using the scan mirrors and transfers the scan beam to the projection unit.

In an embodiment of the present invention, the scan unit 120 uses a mirror scanner. The mirror scanner is composed of an x-y scanner including the x-scan mirror 121 that scans an object (transmitting body) in the x direction (left-right direction) around a y axis, and the y-scan mirror 122 that scans the object (transmitting body) in the y direction (up-down direction) around an x axis. Naturally, the scan unit of the present invention is not limited to the mirror scanner, and similar means or other known scan means may be used therefor. For example, instead of the x-scan mirror and the y-scan mirror, an x-space modulation scanner and a y-space modulation scanner may be used therefor.

In this way, the scan unit 120 controls the incident scan beam in the horizontal direction (x direction) and the vertical direction (y direction) to form an optical axis of a superimposed beam of the first curvature beam and the second curvature beam to be inclined with respect to the optical axis of a scan lens 131 of the projection unit 130 and transfers the scan beam to the projection unit 130.

Here, the scan unit 120 may transfer, to a field plane of the scan lens 131, a scan beam having an optical axis that is inclined with respect to the optical axis of the scan lens 131 according to scan angles of the x-scan mirror and the y-scan mirror that control a scanning position in the horizontal and vertical directions.

The projection unit 130 includes the scan lens 131 and an imaging lens system 132 sequentially arranged between the scan unit 120 and an object. The projection unit 130 may project a scan beam received from the scan unit 120 onto an object plane of the imaging lens system 132 where the object is located.

The projection unit 130 is implemented as a 4-f relay lens system that is afocally coupled between the x-scan mirror 121 and the y-scan mirror 122, such that a rotation axis of the x-scan mirror 121 and a rotation axis of the y-scan mirror 122 may be located at an entrance pupil of the scan lens. In a case where the 4-f relay system is not used, the entrance pupil of the scan lens is preferably located between the x-scan mirror and the y-scan mirror. Here, the rotation axis of the scan mirror is preferably located at the entrance pupil of the scan lens, but is preferably located to be orthogonal to an optical axis of the scan lens.

The scan lens 131 may serve to place an optical axis of the superimposed beam (scan beam) of the first and second curvature beams transferred to the entrance pupil of the scan lens 131 by forming an incline with respect to the optical axis of the scan lens 131 depending on angles of the scan mirror at a position away from the optical axis of the scan lens 131 on a field plane of the scan lens 131. Here, the scan lens 131 may be implemented as a lens capable of performing the above-described function, such as an f-theta scan lens or a telecentric f-theta lens.

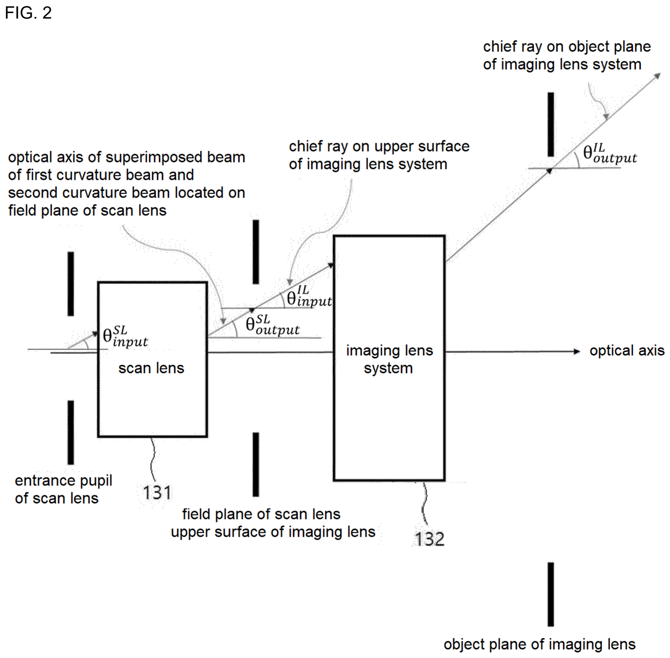

FIG. 2 is a diagram specifically illustrating a configuration of the projection unit illustrated in FIG. 1.

As illustrated in FIG. 2, an optical axis of a scan beam located on the field plane of the scan lens 131 may have a ray angle between -90 degrees and 90 degrees with respect to the optical axis of the scan lens 131.

Specifically, an angle of the scan beam on the field plane of the scan lens 131 is represented as $\theta_{output}^{SL}(x, y)$, when a plane coordinate system on the field plane, in which a point where the field plane of the scan lens 131 intersects the optical axis of the scan lens 131 is set as an origin point, is referred to as x-y.

Here, a ray angle of the scan beam on the field plane of the scan lens 131 may be a function of a position on a plane (a plane orthogonal to an optical axis of the scan lens at the field plane position) of the field plane or may be a constant. That is, the ray angle of the scan beam on the field plane of the scan lens 131 may be defined as a function of a position (x,y) on the plane, as in $\theta_{output}^{SL}(x, y) = f^{SL}(x, y)$, or may also be defined as a constant value, as in $\theta_{output}^{SL}(x, y) = constant$.

In a case where the scan lens 131 is implemented as a telecentric scan lens, a ray angle of the light emitted from the field plane of the scan lens 131 is 0 degrees, which is a constant, with respect to an on-plane position of the field plane, that is, emitted in $\theta_{output}^{SL}(x, y) = 0$, and is parallel to an optical axis of the scan lens, regardless of the on-plane position of the field plane.

In a case where the scan lens 131 is implemented as an f-theta scan lens, a ray angle of the light emitted from the field plane of the scan lens 131 is a function that changes according to the on-plane position of the field plane, that is, $\theta_{output}^{SL}(x, y) = f^{SL}(x, y)$. In addition to this, scan lenses of various configurations may also be utilized.

A superimposed beam of the first curvature beam and the second curvature beam, that is, a scan beam, is transferred to the field plane of the scan lens 131 and then transferred to an image plane (hereinafter, referred to as an imaging plane) of the imaging lens system 132. Here, it is preferable that an optical axis of the scan lens 131 is aligned with an optical axis of the imaging lens system 132. The imaging lens system 132 transfers the scan beam arriving on the imaging plane to an object plane of the imaging lens system 132. Here, an object is located in a region where the imaged scan beam is located.

An angle of a chief ray on the imaging plane of the imaging lens system 132 is represented as $\theta_{input}^{IL}(x, y)$, when a plane coordinate system on the imaging plane, in which a point where the imaging plane of the imaging lens system 132 intersects the optical axis of the imaging lens system 132 is set as an origin point, is referred to as x-y.

Here, a ray angle of a chief ray on the imaging plane of the imaging lens system 132 that images a large-area object may be a function of a position on a plane (a plane orthogonal to the optical axis of the scan lens at an imaging plane position) of the imaging plane of the imaging lens system 132, or may also be a constant. That is, the ray angle may also be $\theta_{input}^{IL}(x, y) = f^{IL}(x, y)$ or may also be $\theta_{input}^{IL}(x, y) = constant$.

In a case where the imaging lens system 132 is implemented as a telecentric imaging lens system, the ray angle of the chief ray on the imaging plane is 0 degrees, which is a constant, with respect to the imaging plane position of the imaging lens system 132, that is $\theta_{output}^{IL}(x, y) = 0$, and is parallel to the optical axis of the imaging lens system 132 regardless of an on-plane position of the imaging plane.

In a case where the imaging lens system 132 is implemented as a general imaging lens system, the angle of the chief ray on the imaging plane is a function that changes according to an on-plane position of the imaging plane, that is,

$$\theta_{input}^{IL}(x, y) = f^{IL}(x, y)$$

In the first embodiment of the present invention, a ray angle of an optical axis of a scan beam transferred from the field plane of the scan lens 131 to the imaging plane of the imaging lens system 132 is preferably aligned with the optical axis of the chief ray of the imaging lens system 132.

As illustrated in FIG. 2, in a case where the field plane of the scan lens 131 is located at the same position as the imaging plane of the imaging lens system 132, it is preferable to satisfy Equation 1 below.

[Equation 1]

$$\theta_{input}^{IL}(x, y) = \theta_{output}^{SL}(x, y)$$

Here, when a plane coordinate system on the imaging plane of the imaging lens system 132 is referred to as x-y, $\theta_{input}^{IL}(x, y)$ represents a ray angle of a chief ray on the imaging plane, and when a plane coordinate system on a field plane of the scan lens 131 is referred to as x-y, $\theta_{output}^{SL}(x, y)$ represents a ray angle of a scan beam on the field plane.

As described above, Equation 1 may also be a function of a plane, as in $\theta_{input}^{IL}(x, y) = \theta_{output}^{SL}(x, y) = f^{IL}(x, y)$, or may also be a constant, as in $\theta_{input}^{IL}(x, y) = \theta_{output}^{SL}(x, y) = constant$.

In a case where a position of the field plane of the scan lens 131 is different from a position of the imaging plane of the imaging lens system 132 and the two planes are separated by a set distance, it is preferable to satisfy Equation 2.

[Equation 2]

$$\theta_{input}^{IL}\big(x + \tan(\theta_{output}^{SL}(x, y)\Delta z), y + \tan(\theta_{output}^{SL}(x, y)\Delta z)\big) = \theta_{output}^{SL}(x, y)$$

Here, $\Delta z$ represents a distance between a field plane of the scan lens 131 and an imaging plane of the imaging lens system 132. Similarly, Equation 2 may be a function according to a plane as $\theta_{input}^{IL}\big(x + \tan(\theta_{output}^{SL}(x, y)\Delta z), y + \tan(\theta_{output}^{SL}(x, y)\Delta z)\big) = f^{IL}(x, y)$, or may also be a constant according to a plane as $\theta_{input}^{IL}\big(x + \tan(\theta_{output}^{SL}(x, y)\Delta z), y + \tan(\theta_{output}^{SL}(x, y)\Delta z)\big) = constant$, according to Equation 1.

In this way, the imaging lens system 132 images a scan beam pattern arriving on an imaging plane of thereof onto an object plane on which an object is located.

Here, an object located on the object plane may be scanned through a method in which an optical axis of the scan beam imaged onto an object plane of the imaging lens system 132 moves to a position horizontally shifted from the optical axis of the imaging lens system 132 on the object plane according to scan of the scan unit 120.

At this time, in a case where a scan beam satisfies Equation 1 or Equation 2 on a field plane of the scan lens 131 and on an imaging plane of the imaging lens system 132, a ray angle of an optical axis of the scan beam at a scan position of the scan beam arriving on an object plane is aligned with a ray angle of a chief ray of the imaging lens system 132 at the corresponding position, and accordingly, distortion of the scan beam due to ray angle mismatch may be removed. At this time, the ray angle of the chief ray on the object plane of the imaging lens system 132 is preferably 0 degrees or more in a direction diverging from the optical axis to scan a Fresnel zone plate on an object equal to or greater than a pupil size of the imaging lens system 132.

A field size $D_{field}$ of a field plane of the scan lens 131 may be determined by a front focal length $f_{FFL}$ and a scan angle $\theta_S$ of the scan lens 131 through Equation 3 below.

[Equation 3]

$$\text{Field Size}\,(D_{field}) = f_{FFL} \times \tan(\theta_S)$$

Here, the scan angle of the scan lens 131 represents a maximum scan half-angle. The field size of the scan lens 131 has to be equal to or less than a field size of an imaging plane of the imaging lens system 132, and preferably, equal thereto. When the field size of the scan lens 131 is greater, vigneting occurs in the imaging lens system 132, causing image distortion in a peripheral region, and the field size plays an important role in solving this.

The light collecting unit 140 detects a beam reflected from an object to which the scan beam is emitted. At least one light collecting unit 140 may be installed on the outer periphery of the projection unit 130 with an optical axis different from an optical axis of the projection unit 130.

The light collecting unit 140 may include a condensing lens system and a photo detector. A structure of the light collecting unit 140 may have various forms.

Specifically, the light collecting unit 140 may include a condensing lens system (condensing optical system) 141, and a photo detector 143, as illustrated in FIG. 1.

The condensing lens system 141 is installed with an optical axis different from an optical axis of the projection unit 130, and can receive beams reflected from an object, collects the beams, and transfers the collected beams to the photo detector 143. The condensing lens system 141 may use a transmissive optical system or a reflective optical system and may be located at a different position from an optical axis of the image lens system 132. Here, the transmissive optical system is made of optical glass or plastic material that allows a wavelength of a laser light source to pass therethrough, and functions to refract and focus light onto the light detector 143. The reflective optical system is made of glass or metal with a reflective coating that allows a laser wavelength to be reflected therefrom, and may be implemented as an off-axis parabolic mirror, a spherical mirror, a parabolic mirror, or so on. Additionally, the condensing lens system 141 may also be implemented as a combination of a reflective optical system and a transmissive optical system.

Here, a bandpass filter (BPF) 142 may be used between the condensing lens system 141 and the photo detector 143 to prevent the light with a wavelength different from a wavelength of a light source of used laser from being incident on the light collecting unit 140.

The photo detector 143 detects the beam passing through the condensing lens system 141 and may be implemented as a photodiode, an avalanche photodiode, a silicon photomultiplier, a photomultiplier tube, or so on.

In this way, the light collecting unit 140 forms an image of an object by imaging a beam reflected from the object through the imaging lens system 132 onto a detection plane of the light detector 143, and spatially integrates and condenses the intensity of the light of an image imaged on the detection plane. Here, the detection plane may also be located not only on a focal plane of an imaged image, but also on a defocused plane of the imaged image.

The light collecting unit 140 may detect the intensity of light of an image on a detection plane of the light detector 143 by collecting the light in a manner that an electrical signal proportional to the sum of light is generated. As illustrated in FIG. 1, the light collecting unit 140 can be installed at a position with a reflection angle greater than 0 degrees based on the beam projected onto an object through the projection unit 130.

In a scan lens according to a general optical design methodology, a ray angle of a scan optical axis on a field plane of the scan lens is equal to or greater than 0 degrees, and a ray angle of a chief ray on an image plane of the imaging lens system is equal to or less than 0 degrees.

Therefore, except a case of a telecentric scan lens in which a ray angle of an optical axis on a field plane of a scan lens is 0 degrees and a telecentric imaging lens system in which a ray angle of a chief ray on an image plane is 0 degrees, in a case where a projection unit is made by coupling a commercially available scan lens designed according to a general optical design methodology to a commercially available imaging lens system, distortion and scan field limitations occur on an object plane of a scan beam pattern, which is a superimposed beam of the first curvature beam and the second curvature beam, due to misalignment of a scan optical axis of the scan lens with an optical axis of a chief ray of an imaging lens system.

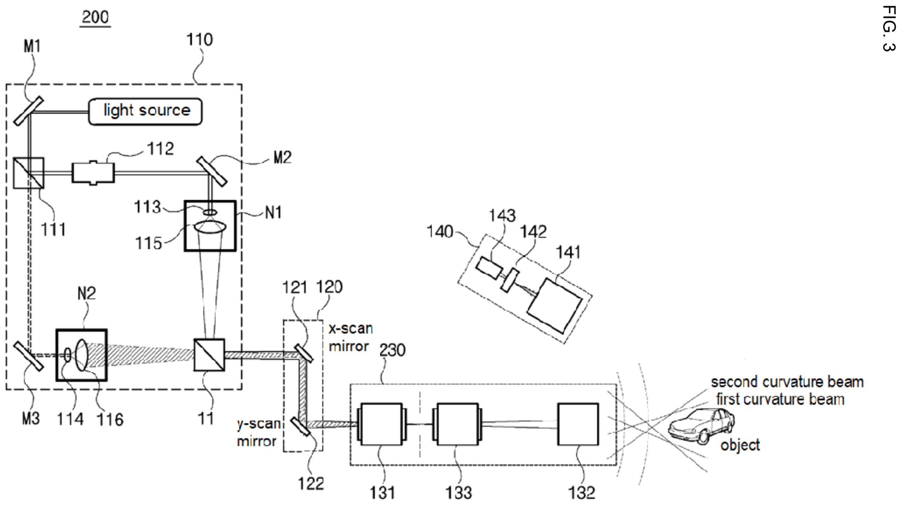

To overcome this, a projection unit 230 of the second embodiment according to FIG. 3 below has a structure in which an optical axis conversion lens 133 is additionally provided between the scan lens 131 and the imaging lens system 132. The above-described configuration is described below by being divided into six cases (Cases 1, 2, 3, 4, 5, and 6).

FIG. 3 is a diagram illustrating a configuration of a large-area scanning hologram camera system according to a second embodiment of the present invention.

As illustrated in FIG. 3, a large-area scanning hologram camera system 100 according to the second embodiment includes a scan beam generation unit 110, a scan unit 120, a projection unit 230, and a light collecting unit 140. Duplicate descriptions of components having the same reference numerals as the components in FIG. 1 are omitted.

As described above, in the second embodiment, the projection unit 230 has a structure including a scan lens 131, an optical axis conversion lens 133, and an imaging lens system 132. Here, the optical axis conversion lens 133 is disposed between the scan lens 131 and the imaging lens system 132 to align the center of an optical axis of the scan lens 131 with the center of an optical axis of the imaging lens system 132.

In the second embodiment, the scan lens 131 may be implemented as a telecentric type scan lens having a light angle of 0 degrees on a field plane, a non-telecentric type general scan lens having a light angle of 0 degrees or more on the field plane, or a general scan lens having a light angle of 0 degrees or less on the field plane. Here, "0 degrees or more" may mean an angle that is greater than 0 degrees, and "less than 0 degrees" may mean an angle that is less than 0 degrees.

Also, the imaging lens system 132 may be implemented as an imaging lens system in which a ray angle of a chief ray on an imaging plane is 0 degrees or more, or by an imaging lens system in which the ray angle of the chief ray on the imaging plane is 0 degrees or less. Here, "0 degrees or more" may mean an angle that is greater than 0 degrees, and "less than 0 degrees" may mean an angle that is less than 0 degrees.

Here, the projection unit 230 may be divided into a total of six cases as follows, depending on combinations of implementation examples of the scan lens 131 and the imaging lens system 132 described above.

Case 1: A telecentric scan lens, an optical axis conversion lens, and an imaging lens system in which a ray angle of a chief ray on an imaging plane is 0 degrees or more (a first structure)

Case 2: A telecentric scan lens, an optical axis conversion lens, and an imaging lens system in which the ray angle of the chief ray on the imaging plane is 0 degrees or less (a second structure)

Case 3: A scan lens in which the ray angle on the field plane is 0 degrees or more, an optical axis conversion lens, and an imaging lens system in which the ray angle of the chief ray on the field plane is 0 degrees or more (a third structure)

Case 4: A scan lens in which the ray angle on the field plane is 0 degrees or more, an optical axis conversion lens, and an imaging lens system in which the ray angle of the chief ray on the imaging plane is 0 degrees or less (a fourth structure)

Case 5: A scan lens in which the ray angle on the field plane is 0 degrees or less, an optical axis conversion lens, and an imaging lens system in which the ray angle of the chief ray on the imaging plane is 0 degrees or more (a fifth structure)

Case 6: A scan lens in which the ray angle on the field plane is 0 degrees or less, an optical axis conversion lens, and an imaging lens system in which the ray angle of the chief ray on the imaging plane is 0 degrees or less (a sixth structure)

That is, the projection unit 230 may be implemented with a structure selected from among the first structure to the sixth structures described above.

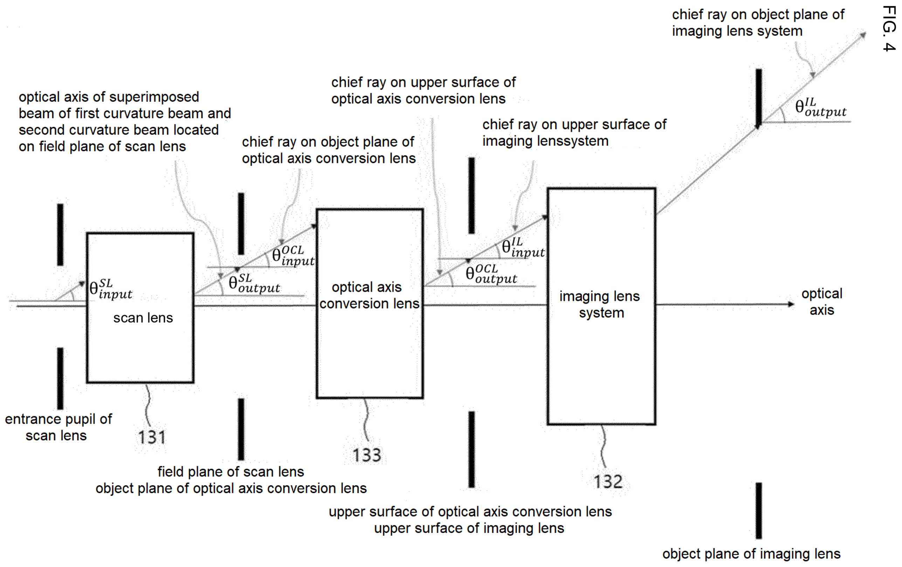

FIG. 4 is a drawing specifically illustrating a configuration of the projection unit illustrated in FIG. 3.

As illustrated in FIG. 4, an optical axis of a scan beam located on a field plane of the scan lens 131 may have a ray angle between -90 degrees and 90 degrees with respect to an optical axis of the scan lens 131.

Specifically, an angle of the scan beam on the field plane of the scan lens 131 is represented as $\theta^{scan\ lens}_{output}(x, y)$, when a plane coordinate system on a field plane, in which a point where a field plane of the scan lens 131 intersects an optical axis of the scan lens 131 is set as an origin point, is referred to as x-y.

Here, the ray angle of the scan beam on the field plane of the scan lens 131 may be a function of a position on a plane (a plane orthogonal to an optical axis of the scan lens at a field plane position) of the field plane or may be a constant. That is, the ray angle of the scan beam on the field plane of the scan lens 131 may be defined as a function of a position (x,y) on a plane, as in $\theta^{SL}_{output}(x, y) = f^{SL}(x, y)$, or may also be defined as a constant value, as in $\theta^{SL}_{output}(x, y) = constant$.

In a case where the scan lens 131 is implemented as a telecentric scan lens, a ray angle of the light emitted from the field plane of the scan lens 131 is 0 degrees which is a constant, with respect to an on-plane position of the field plane, that is, emitted in $\theta^{SL}_{output}(x, y) = 0$, and is parallel to an optical axis of the scan lens, regardless of the on-plane position of the field plane.

In a case where the scan lens 131 is implemented as an f-theta scan lens, a ray angle of the light emitted from the field plane of the scan lens 131 becomes a function that changes depending on on-plane positions of the field plane, that is, $\theta^{SL}_{output}(x, y) = f^{SL}(x, y)$. Scan lenses of various configurations may also be utilized.

In the structure of the second embodiment, a superimposed beam of the first curvature beam and the second curvature beam, that is, a scan beam, is transferred to a field plane of the scan lens 131 and then, transferred to an object plane (image plane) of the optical axis conversion lens 133. Here, it is preferable that an optical axis of the scan lens 131 is located to be aligned with an optical axis of the optical axis conversion lens 133.

A ray angle of a chief ray on the object plane of the optical axis conversion lens 133 is represented as $\theta^{OCL}_{input}(x, y)$, when a plane coordinate system on the object plane, in which a point where the object plane of the optical axis conversion lens 133 intersects an optical axis of the optical axis conversion lens is set as an origin point, is referred to as x-y.

Here, the ray angle of the chief ray on the object plane of the optical axis conversion lens 133 may be a function according to a position on a plane (a plane orthogonal to an optical axis of a scan lens from a position of the object plane) of the object plane or may also be a constant. That is, the ray angle may be $\theta_{input}^{OCL}(x,y) = f^{OCL}(x,y)$ or

$$\theta_{input}^{OCL}(x,y) = Constant$$

As in the conditions of Cases 1 and 2, in a case where the scan lens 131 is implemented as a telecentric scan lens system, a ray angle of a chief ray on a field plane of the scan lens 131 is 0 degrees, which is a constant, with respect to a field plane position of the scan lens 131, that is, $\theta_{output}^{SL}(x,y) = 0$, and a ray angle on an object plane of the optical axis conversion lens 133 is parallel to an optical axis of the optical axis conversion lens 133 regardless of an on-plane position on the object plane.

Naturally, in a case where the scan lens 131 is implemented as a general scan lens rather than the telecentric scan lens, a ray angle of the light emitted from a field plane of the scan lens 131 becomes a function that changes depending on on-plane position of the field plane, that is, $\theta_{output}^{SL}(x,y) = f^{SL}(x,y)$.

In the second embodiment of the present invention, it is preferable that a ray angle of an optical axis of a scan beam transferred from a field plane of the scan lens 131 to an object plane of the optical axis conversion lens 133 is aligned with an optical axis of a chief ray of the optical axis conversion lens 133.

As illustrated in FIG. 4, in a case where a field plane of the scan lens 131 is located at the same position as an object plane of the optical axis conversion lens 133, it is preferable to satisfy Equation 4 below.

[Equation 4]

$$\theta_{input}^{OCL}(x,y) = \theta_{output}^{SL}(x,y)$$

Here, when a plane coordinate system on an object plane of the optical axis conversion lens 133 is referred to as x-y, $\theta_{input}^{OCL}(x,y)$ represents a ray angle of a chief ray on the object plane, and when a plane coordinate system on a field plane of the scan lens 131 is referred to as x-y, $\theta_{output}^{SL}(x,y)$ represents a ray angle of a scan beam on the field plane.

Equation 4 may be a function according to a plane, that is, $\theta_{input}^{OCL}(x,y) = \theta_{output}^{SL}(x,y) = f^{OCL}(x,y)$, as in the CASE 3, 4, 5, and 6 conditions, or may also be a constant according to the plane, that is, $\theta_{input}^{OCL}(x,y) = \theta_{output}^{SL}(x,y) = constant$, as in the CASE 1 and 2 conditions.

In a case where a position of a field plane of the scan lens 131 is different from a position of an object plane of the optical axis conversion lens 133 and the two planes are separated by a set distance, it is preferable to satisfy Equation 5 below.

[Equation 5]

$$\theta_{input}^{OCL}\left(x + \tan(\theta_{output}^{SL}(x,y)\Delta z), y + \tan(\theta_{output}^{SL}(x,y)\Delta z)\right) = \theta_{output}^{SL}(x,y)$$

Here, $\Delta z$ represents a distance between a field plane of the scan lens 131 and an object plane of the optical axis conversion lens 133.

Similarly, according to Equation 4, in CASEs 3, 4, 5, and 6, Equation 5 may be a function according to a plane, that is, $\theta_{input}^{OCL}\left(x + \tan(\theta_{output}^{SL}(x,y)\Delta z), y + \tan(\theta_{output}^{SL}(x,y)\Delta z)\right) = f^{OCL}(x,y)$, and in CASEs 1 and 2, Equation 5 may be a constant according to the plane, that is, $\theta_{input}^{OCL}\left(x + \tan(\theta_{output}^{SL}(x,y)\Delta z), y + \tan(\theta_{output}^{SL}(x,y)\Delta z)\right) = constant$.

A scan beam arriving on an imaging plane of the optical axis conversion lens 133 is transferred to an imaging plane of the imaging lens system 132. Here, it is preferable that an optical axis of the scan lens 131 is aligned with an optical axis of the imaging lens system 132.

The imaging lens system 132 images the scan beam arriving at an imaging plane and transfers the scan beam to an object plane of the imaging lens system 132. Here, an object is located in a region where the imaged scan beam is located.

An angle of a chief ray on an imaging plane of the imaging lens system 132 is represented as $\theta_{input}^{IL}(x,y)$, when a plane coordinate system on the imaging plane, in which a point where the imaging plane of the imaging lens system 132 intersects an optical axis of the imaging lens system 132 is set as an origin point, is referred to as x-y.

At this time, a ray angle of the chief ray on the imaging plane of the imaging lens system 132 that images a large-area object may be a function of a position on a plane (a plane orthogonal to an optical axis of a scan lens at an imaging plane position) of the imaging plane of the imaging lens system 132 or may also be a constant. That is, the ray angle may also be $\theta_{input}^{IL}(x,y) = f^{IL}(x,y)$, or may also be $\theta_{input}^{IL}(x,y) = constant$.

In a case where the imaging lens system 132 is implemented as a telecentric imaging lens system, a ray angle of a chief ray on an imaging plane is 0 degrees which is a constant, that is, $\theta_{output}^{IL}(x,y) = 0$, with respect to an imaging plane position of the imaging lens system 132, and is parallel to an optical axis of the imaging lens system 132 regardless of an on-plane position on the imaging plane.

In a case where the imaging lens system 132 is implemented as a general imaging lens system, an angle of a chief ray on an imaging plane becomes a function that changes depending on on-plane positions of the imaging plane, that is,

$$\theta_{input}^{IL}(x,y) = f^{IL}(x,y).$$

In the second embodiment of the present invention, it is preferable that a ray angle of an optical axis of a scan beam transferred from a field plane of the scan lens 131 to an imaging plane of the imaging lens system 132 is aligned with an optical axis of the chief ray of the imaging lens system 132.

As illustrated in FIG. 4, in a case where an imaging plane of the optical axis conversion lens 133 is located at the same position as an imaging plane of the imaging lens system 132, it is preferable to satisfy Equation 6 below.

[Equation 6]

$$\theta_{input}^{IL}(x,y) = \theta_{output}^{OCL}(x,y)$$

Here, when a plane coordinate system on an image plane of an imaging lens system is referred to as x-y, $\theta_{input}^{IL}(x,y)$ represents a ray angle of a chief ray on the imaging plane, and when a plane coordinate system on an image plane of an optical axis conversion lens is referred to as x-y, $\theta_{output}^{OCL}(x,y)$ represents a ray angle of a scan beam on the imaging plane.

Equation 6 may also be a function according to a plane, such as

$$\theta_{input}^{IL}(x,y) = \theta_{output}^{OCL}(x,y) = f^{IL}(x,y),$$ or may also be a constant according to a plane, such as

$$\theta_{input}^{IL}(x,y) = \theta_{output}^{OCL}(x,y) = constant.$$

In a case where a position of an imaging plane of the optical axis conversion lens 133 is different from a position of an imaging plane of the imaging lens system 132 and the two planes are separated by a set distance, it is preferable to satisfy Equation 7 below.

[Equation 7]

$$\theta_{input}^{IL}\left(x + \tan\left(\theta_{output}^{OCL}(x,y)\Delta z\right), y + \tan\left(\theta_{output}^{OCL}(x,y)\Delta z\right)\right) = \theta_{output}^{OCL}(x,y)$$

Here, $\Delta z$ represents a distance between the imaging plane of the optical axis conversion lens 133 and the imaging plane of the imaging lens system 132. According to Equation 6, in CASE 3, 4, 5, and 6 conditions, Equation 7 may be a function according to a plane, such as

$$\theta_{input}^{IL}\left(x + \tan\left(\theta_{output}^{OCL}(x,y)\Delta z\right), y + \tan\left(\theta_{output}^{OCL}(x,y)\Delta z\right)\right) = f^{IL}(x,y)$$

and in the case of CASE 1 and 2 conditions, Equation 6 may be a constant according to a plane, such as

$$\theta_{input}^{IL}\left(x + \tan\left(\theta_{output}^{OCL}(x,y)\Delta z\right), y + \tan\left(\theta_{output}^{OCL}(x,y)\Delta z\right)\right) = constant$$

The imaging lens system 132 images the scan beam arriving on the imaging plane of the imaging lens system 132 onto an object plane of the imaging lens system 132.

At this time, by satisfying Equation 4 or Equation 5 described above and Equation 6 or Equation 7 described above, a ray angle of an optical axis of a scan beam is aligned with a ray angle of a chief ray of the imaging lens system 132 at a scan position of the scan beam arriving on an object plane, and accordingly, distortion of the scan beam due to misalignment between the ray angles may be removed. Similarly, a ray angle of a chief ray on an object plane of the imaging lens system 132 is preferably 0 degrees or greater in a direction diverging from an optical axis to scan a Fresnel zone plate on an object having a pupil size that is equal to or greater than a pupil size of the imaging lens system 132.

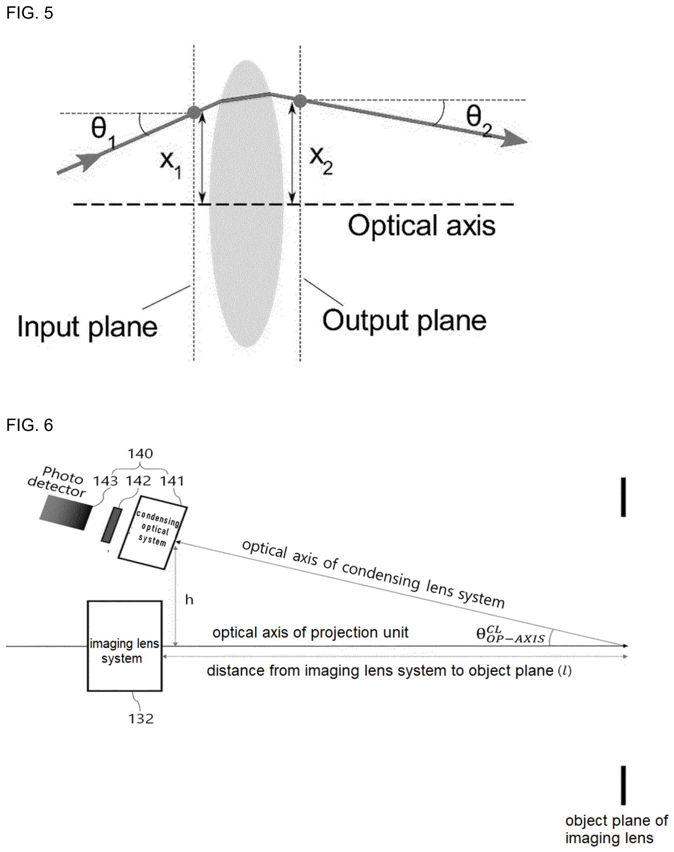

FIG. 5 is a diagram illustrating a ray angle of light in an optical system. As illustrated in FIG. 5, in an embodiment of the present invention, the ray angle may refer to an inclination angle of a ray propagated at an inclination angle with respect to an optical axis of an optical system. FIG. 5 illustrates examples of a ray angle θ1 of an incident beam and a ray angle θ2 of an exit beam with respect to a lens system.

FIG. 6 is a diagram illustrating a position of a condensing lens system installed axially with respect to an optical axis of an imaging lens system in an embodiment of the present invention.

FIG. 6 illustrates that an incident surface of the condensing lens system 141 is spaced apart from an optical axis of the imaging lens system 132 by a distance $h$ to be perpendicular to the optical axis and that an optical axis of the condensing lens system 141 is rotated by $\theta_{OP-AXIS}^{CL}$ with respect to the optical axis of the imaging lens system 132.

As illustrated in FIG. 6, an optical axis of the light collecting unit 140 can be rotated by $\theta_{OP-AXIS}^{CL}$, as represented by Equation 8, with respect to an optical axis of the projection unit 130 based on an intersection point where the optical axis of the projection unit 130 meets an object plane.

[Equation 8]

$$\theta_{OP-AXIS}^{CL} = \tan^{-1}\frac{h}{\ell}$$

Here, $h$ represents a distance between the optical axis of the imaging lens system 132 in the projection unit 130 and the condensing lens system 141 in the light collecting unit 140, and $\ell$ represents a distance between the imaging lens system 132 and an object.

In an embodiment of the present invention, the light collecting unit 140 may be installed on the outside of the projection unit 130 as illustrated in FIGS. 1 and 3, but multiple light collecting units may be installed along the periphery of the projection unit 130.

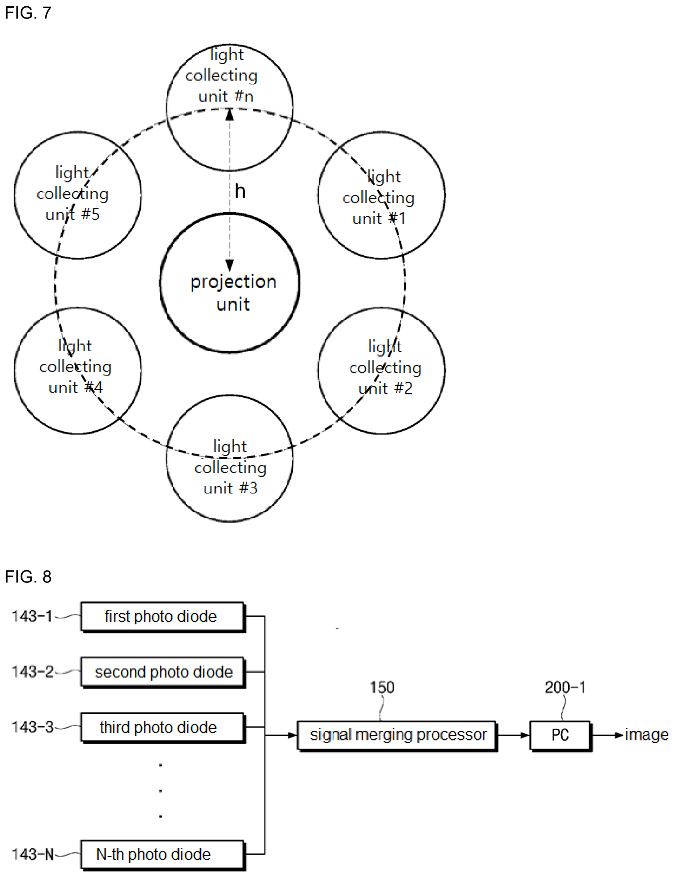

FIG. 7 is a diagram illustrating a modification example of the light collecting unit according to an embodiment of the present invention.

As illustrated in FIG. 7, multiple light collecting units #1 to #n may be installed with different optical axes around the imaging lens system 132 of the projection unit 130 in a state of being spaced apart from the imaging lens system 132 at a distance of $h$. The multiple light collecting units #1 to #n may be arranged symmetrically around the projection unit 130, or may be arranged asymmetrically. The light collecting unit configuration of FIG. 7 is applicable to the systems 100 and 200 of FIGS. 1 and 3.

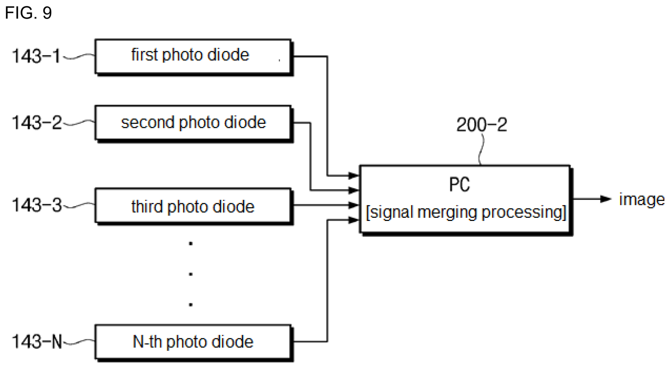

FIGS. 8 and 9 are diagrams illustrating examples of a process of generating a holographic image by combining signals collected by multiple light collecting units in an embodiment of the present invention.

The systems 100 and 200 according to the first and second embodiments of the present invention may combine the electrical signals for multiple beams detected by multiple light collecting units 140 (specifically, photo detectors 143-1, 143-2, ..., 143-N) through a signal merging processor 150 and then transmit the electrical signals to a PC 10 (10-1) for holographic image processing (see FIG. 8), and unlike this, the systems may directly transmit the electrical signals for multiple beams detected by the multiple light collection units 140 (specifically, photo detectors 143-1, 143-2, ..., 143-N) to the PC 10 (10-2) that may perform signal merging and holographic image processing (see FIG. 9).

In the former case, as illustrated in FIG. 8, each of the systems 100 and 200 may further include a signal merging processor 150. In this case, the signal merging processor 150 directly receives and merges signals from the multiple light collecting units 140 and transmits the signals to the PC 10 (10-1). Then, the PC 10 (10-1) can perform hologram signal processing based on the received merged signals to generate a holographic image.

In the latter case, as illustrated in FIG. 9, the systems 100 and 200 may each transmit the electrical signals for multiple beams detected by the multiple light collecting units 140 to the PC 10 (10-2). Then, the PC 10 (10-2) can directly merge the electrical signals for the received multiple beams and perform hologram signal processing to generate a holographic image. Also, the systems 100 and 200 can each be connected to the PC 10 through a wired network, a wireless network, or a hybrid wired-wireless network.

According to the present invention described above, a high-resolution scanning hologram camera may be implemented for a large area by using a scanning hologram camera system in which a projection unit is coupled to a light collecting unit.

While the present invention is described with reference to the embodiments illustrated in the drawings, the embodiments are merely examples, and those skilled in the art will understand that various modifications and equivalent alternative embodiments may be derived therefrom. Therefore, the true scope of technical protection of the present invention should be determined by the technical idea of the appended claims.

## Claims

1. A large-area scanning hologram camera system comprising:

   a scan beam generation unit configured to modulate a phase of a first beam split from a light source, convert the first beam into a first curvature beam through a first beam curvature generation unit, convert a second beam into a second curvature beam through a second beam curvature generation unit, and then interfere the first and second curvature beams to form a scan beam;
   a scan unit configured to receive the scan beam, project the scan beam onto an object, and transfer the scan beam to the object by controlling a scanning position of the scan beam relative to the object in a horizontal direction and a vertical direction;
   a projection unit including a scan lens and an imaging lens system and configured to project the scan beam received from the scan unit onto an object plane where the object is located; and
   at least one light collecting unit installed on an outside of the projection unit with an optical axis different from an optical axis of the projection unit and configured to detect a beam reflected from the object.

2. The large-area scanning hologram camera system of claim 1, wherein the light collecting unit includes:

   a condensing lens system installed with an optical axis different from the optical axis of the projection unit and receiving the beam reflected from the object; and
   a light detector configured to detect a beam passing through the condensing lens system.

3. The large-area scanning hologram camera system of claim 1, wherein

   the light collecting unit is rotated by an angle $\theta_{OP-AXIS}^{CL}$ of an equation below with respect to the optical axis of the projection unit based on an intersection point where the optical axis of the projection unit meets the object plane:

$$\theta_{OP-AXIS}^{CL} = \tan^{-1}\frac{h}{\ell}$$

   where, $h$ represents a distance between an optical axis of the imaging lens system in the projection unit and a condensing lens system into which a beam is incident in the light collecting unit, and $\ell$ represents a distance between the imaging lens system and the object.

4. The large-area scanning hologram camera system of claim 1, wherein

a plurality of light collecting units are installed around the projection unit with different optical axes, and electric signals for the plurality of beams detected by the plurality of light collecting units are combined by a signal merging processor and then transmitted to a PC for holographic image processing, or the electric signals for the plurality of beams detected by the plurality of light collecting units are transmitted to a PC for signal merging and holographic image processing.

5. The large-area scanning hologram camera system of claim 1, wherein the imaging lens system images a scan beam pattern arriving on an imaging plane of the imaging lens system onto the object plane where the object is located.

6. The large-area scanning hologram camera system of claim 1, wherein the scan unit transfers the scan beam, which has an optical axis that is inclined with respect to an optical axis of the scan lens according to scan angles of an x-scan unit and a y-scan unit for controlling the scanning position in the horizontal direction and the vertical direction, to a field plane of the scan lens.

7. The large-area scanning hologram camera system of claim 1, wherein,

in a case where a field plane of the scan lens is located at the same position as an imaging plane of the imaging lens system, an equation below is satisfied;

$$\theta_{input}^{IL}(x, y) = \theta_{output}^{SL}(x, y)$$

where $\theta_{input}^{IL}(x, y)$ represents a ray angle of a chief ray on the imaging plane of the imaging lens system when a plane coordinate system on the imaging plane of the imaging lens system is referred to as x-y, and $\theta_{output}^{SL}(x, y)$ represents a ray angle of a scan beam on the field plane of the scan lens when a plane coordinate system on the field plane of the scan lens is referred to as x-y.

8. The large-area scanning hologram camera system of claim 1, wherein,

in a case where a position of a field plane of the scan lens is different from a position of an imaging plane of the imaging lens system and the field plane and the imaging plane are separated by a set distance, an equation below is satisfied;

$$\theta_{input}^{IL}\left(x + \tan\left(\theta_{output}^{SL}(x, y)\Delta z\right), y + \tan\left(\theta_{output}^{SL}(x, y)\Delta z\right)\right) = \theta_{output}^{SL}(x, y)$$

where $\Delta z$ represents a distance between the field plane of the scan lens and the imaging plane of the imaging lens system, $\theta_{input}^{IL}(x, y)$ represents a ray angle of a chief ray on the imaging plane of the imaging lens system when a plane coordinate system on the imaging plane of the imaging lens system is referred to as x-y, and $\theta_{output}^{SL}(x, y)$ represents a ray angle of a scan beam on the field plane of the scan lens when a plane coordinate system on the field plane of the scan lens is referred to as x-y.

9. The large-area scanning hologram camera system of claim 1, wherein

a field size on a field plane of the scan lens is determined by a front focal length and a scan angle of the scan lens through an equation below:

$$\text{Field Size}\left(D_{field}\right) = f_{\text{FFL}} \times \tan(\theta_S)$$

where, $D_{field}$ is a field size on a field plane of the scan lens and is equal to or less than a field size on an imaging plane of the imaging lens system, $f_{FFL}$ represents a front focal length of the scan lens, and $\theta_S$ represents a maximum scan half-angle as a scan angle of the scan lens.

10. The large-area scanning hologram camera system of claim 1, wherein
the projection unit further includes an optical axis conversion lens disposed between the scan lens and the imaging lens system and configured to align a center of an optical axis of the scan lens with a center of an optical axis of the imaging lens system.

11. The large-area scanning hologram camera system of claim 10, wherein
the projection unit is implemented as a structure selected from among:

a first structure including a telecentric-type scan lens having a ray angle of 0 degrees on a field plane, the optical axis conversion lens, and an imaging lens system having a ray angle of 0 degrees or more of a chief ray on an imaging plane,
a second structure including a telecentric-type scan lens, the optical axis conversion lens, and an imaging lens system having a ray angle of 0 degrees or less of the chief ray on the imaging plane,
a third structure including a scan lens having a ray angle of 0 degrees or more on the field plane, the optical axis conversion lens, and an imaging lens system having a ray angle of 0 degrees or more of the chief ray on the imaging plane,
a fourth structure including a scan lens having a ray angle of 0 degrees or more on the field plane, the optical axis conversion lens, and an imaging lens system having a ray angle of 0 degrees or less of the chief ray on the imaging plane,
a fifth structure including a scan lens having a ray angle of 0 degrees or less on the field plane, the optical axis conversion lens, and an imaging lens system having a ray angle of 0 degrees or more of the chief ray on the imaging plane, and
a sixth structure including a scan lens having a ray angle of 0 degrees or less on the field plane, the optical axis conversion lens, an imaging lens system having a ray angle of 0 degrees or less of the chief ray on the imaging plane.

12. The large-area scanning hologram camera system of claim 10, wherein,

in a case where a field plane of the scan lens is at the same position as an object plane of the optical axis conversion lens, an equation below is satisfied:

$$\theta_{input}^{OCL}(x, y) = \theta_{output}^{SL}(x, y)$$

where $\theta_{input}^{OCL}(x, y)$ represents a ray angle of a chief ray on the object plane of the optical axis conversion lens when a plane coordinate system on the object plane of the optical axis conversion lens is referred to as x-y, and
$\theta_{output}^{SL}(x, y)$ represents a ray angle of a scan beam on the field plane of the scan lens when a plane coordinate system on the field plane of the scan lens is referred to as x-y.

13. The large-area scanning hologram camera system of claim 10, wherein,

in a case where a position of a field plane of the scan lens is different from a position of an object plane of the optical axis conversion lens and the field plane and the object plane are separated by a set distance, an equation below is satisfied:

$$\theta_{input}^{OCL}\left(x + \tan\left(\theta_{output}^{SL}(x, y)\Delta z\right), y + \tan\left(\theta_{output}^{SL}(x, y)\Delta z\right)\right) = \theta_{output}^{SL}(x, y)$$

where $\Delta z$ represents a distance between the field plane of the scan lens and the object plane of the optical axis conversion lens, $\theta_{input}^{OCL}(x, y)$ represents a ray angle of a chief ray on the object plane of the optical axis conversion lens when a plane coordinate system on the object plane of the optical axis conversion lens is referred to as x-y, and $\theta_{output}^{SL}(x,y)$ represents a ray angle of a scan beam on the field plane of the scan lens when a plane coordinate system on the field plane of the scan lens is referred to as x-y.

14. The large-area scanning hologram camera system of claim 10, wherein

in a case where an imaging plane of the optical axis conversion lens is at the same position as an imaging plane of the imaging lens system, an equation below is satisfied:

$$\theta_{input}^{IL}(x,y) = \theta_{output}^{OCL}(x,y)$$

where $\theta_{input}^{IL}(x,y)$ represents a ray angle of a chief ray on the imaging plane of the imaging lens system when a plane coordinate system on an image plane of the imaging lens system is referred to as x-y, and $\theta_{output}^{OCL}(x,y)$ represents a ray angle of a scan beam on the imaging plane of the optical axis conversion lens when a plane coordinate system on the imaging plane of the optical axis conversion lens is referred to as x-y.

15. The large-area scanning hologram camera system of claim 10, wherein,

in a case where a position of an imaging plane of the optical axis conversion lens is different from a position of an imaging plane of the imaging lens system and the imaging planes are separated by a set distance, an equation below is satisfied;

$$\theta_{input}^{IL}\left(x + \tan\left(\theta_{output}^{OCL}(x,y)\Delta z\right), y + \tan\left(\theta_{output}^{OCL}(x,y)\Delta z\right)\right) = \theta_{output}^{OCL}(x,y)$$

where $\Delta z$ represents a distance between the imaging plane of the optical axis conversion lens and the imaging plane of the imaging lens system, $\theta_{input}^{IL}(x,y)$ represents a ray angle of a chief ray on the imaging plane of the imaging lens system when a plane coordinate system on an image plane of the imaging lens system is referred to as x-y, and $\theta_{output}^{OCL}(x,y)$ represents a ray angle of a scan beam on the imaging plane of the optical axis conversion lens when a plane coordinate system on the imaging plane of the optical axis conversion lens is referred to as x-y.

FIG. 1

FIG. 2

chief ray on object plane
of imaging lens system

$\theta^{IL}_{output}$

optical axis of superimposed beam
of first curvature beam and
second curvature beam located on
field plane of scan lens

chief ray on upper surface
of imaging lens system

$\theta^{IL}_{input}$

$\theta^{SL}_{output}$

$\theta^{SL}_{input}$

scan lens

imaging lens
system

optical axis

entrance pupil
of scan lens

131

field plane of scan lens
upper surface of imaging lens

132

object plane of imaging lens

FIG. 3

FIG. 4

EP 4 722 821 A1

FIG. 5

FIG. 6

FIG. 7

FIG. 8

FIG. 9

143-1 — first photo diode

143-2 — second photo diode

143-3 — third photo diode

.
.
.

143-N — N-th photo diode

200-2

PC
[signal merging processing]

→ image

## INTERNATIONAL SEARCH REPORT

| International application No. |
|---|
| **PCT/KR2023/013145** |

**A.    CLASSIFICATION OF SUBJECT MATTER**

**G03H 1/04**(2006.01)i; **G02B 3/00**(2006.01)i; **G03H 1/22**(2006.01)i

According to International Patent Classification (IPC) or to both national classification and IPC

**B.    FIELDS SEARCHED**

Minimum documentation searched (classification system followed by classification symbols)

G03H 1/04(2006.01); B60K 35/00(2006.01); G02B 21/36(2006.01); G02B 27/01(2006.01); G02B 27/10(2006.01); G03H 1/08(2006.01); G03H 1/22(2006.01); G03H 1/26(2006.01); G11B 7/0065(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 홀로그램(hologram), 집광부(condensing part), 곡률(curvature), 빔(beam), 스캔 (scan), 투사(projection)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2022-0145584 A (CUBIXEL CO., LTD.) 31 October 2022 (2022-10-31)<br>See paragraphs [0060]-[0105]; claims 1 and 21; and figure 1a. | 1-2,4-6,10 |
| A | | 3,7-9,11-15 |
| Y | KR 10-2020-0114308 A (INDUSTRY ACADEMY COOPERATION FOUNDATION OF SEJONG UNIVERSITY) 07 October 2020 (2020-10-07)<br>See paragraphs [0069]-[0084]; and figure 1. | 1-2,4-6,10 |
| Y | JP 2014-174494 A (HITACHI MEDIA ELECTRONICS CO., LTD.) 22 September 2014 (2014-09-22)<br>See paragraphs [0012]-[0019]; claim 5; and figure 7. | 10 |
| A | KR 10-2530552 B1 (CUBIXEL CO., LTD.) 10 May 2023 (2023-05-10)<br>See claims 1 and 13-14. | 1-15 |

☑ Further documents are listed in the continuation of Box C.          ☑ See patent family annex.

| | |
|---|---|
| \*    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **16 February 2024** | **28 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2023/013145** |

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2013-0081127 A (INDUSTRY ACADEMY COOPERATION FOUNDATION OF SEJONG UNIVERSITY) 16 July 2013 (2013-07-16)<br>See paragraphs [0028]-[0070]; and figures 1-4. | 1-15 |

Form PCT/ISA/210 (second sheet) (July 2022)

**INTERNATIONAL SEARCH REPORT**
Information on patent family members

International application No.

**PCT/KR2023/013145**

| Patent document cited in search report | | | Publication date (day/month/year) | Patent family member(s) | | | Publication date (day/month/year) |
|---|---|---|---|---|---|---|---|
| KR | 10-2022-0145584 | A | 31 October 2022 | None | | | |
| KR | 10-2020-0114308 | A | 07 October 2020 | KR | 10-2185432 | B1 | 01 December 2020 |
| JP | 2014-174494 | A | 22 September 2014 | CN | 104133292 | A | 05 November 2014 |
| | | | | CN | 104133292 | B | 05 January 2018 |
| | | | | EP | 2796919 | A1 | 29 October 2014 |
| | | | | EP | 2796919 | B1 | 20 March 2019 |
| | | | | JP | 6207850 | B2 | 04 October 2017 |
| | | | | US | 2014-0268358 | A1 | 18 September 2014 |
| | | | | US | 9348140 | B2 | 24 May 2016 |
| KR | 10-2530552 | B1 | 10 May 2023 | None | | | |
| KR | 10-2013-0081127 | A | 16 July 2013 | KR | 10-1304695 | B1 | 06 September 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1304695